**Europäisches Patentamt**

**European Patent Office**

**Office européen des brevets**

(11) Veröffentlichungsnummer: **0 324 894**
**A2**

# EUROPÄISCHE PATENTANMELDUNG

(21) Anmeldenummer: 88111755.0

(22) Anmeldetag: 21.07.88

(51) Int. Cl.4: **E01C 5/06 , F16H 55/14**

(30) Priorität: 21.01.88 DE 3801671

(43) Veröffentlichungstag der Anmeldung:
26.07.89 Patentblatt 89/30

(84) Benannte Vertragsstaaten:
**ES FR GB IT SE**

(71) Anmelder: **Pelzer, Helmut**
**Neue Strasse 5**
**D-5804 Herdecke-Ende(DE)**

(72) Erfinder: **Pelzer, Helmut**
**Neue Strasse 5**
**D-5804 Herdecke-Ende(DE)**

(74) Vertreter: **Schneider, Wilhelm, Dipl.-Phys.**
**Danziger Weg 9**
**D-3052 Bad Nenndorf(DE)**

(54) **Schwingungsgedämpfte Welle und Verfahren zu ihrer Herstellung.**

(57) Eine schwingungsgedämpfte Welle ist als Hohlwelle ausgeführt. Ihre innere Wandung ist mit einer Schicht aus viskoselastischem Material beschichtet, an die ein koaxialer zylinderischer Körper kraftschlüssig anliegt. Der zylinderische Körper kann massiv oder ebenfalls als Hohlwelle mit oder ohne wendelförmigen Schlitz ausgebildet sein. Zum Anbringen der Schicht aus dem viskoselastischem Material wird die Hohlwelle getaucht. Der zylinderische Körper wird mit vermindertem Durchmesser oder durch Pressen eingebracht.

*Fig. 1*

EP 0 324 894 A2

## Schwingungsgedämpfte Welle und Verfahren zu ihrer Herstellung

Gegenstand der Erfindung ist zunächst eine schwingungsgedämpfte Welle mit einer Dämpfungsschicht aus einer viskoselastischen Masse.

Bei umlaufenden Wellen treten Schwingungen sowohl als Biegeschwingungen als auch als Torsionsschwingungen mit unterschiedlichen Moden auf. Da die Wellen gewöhnlich mit Rädern besetzt sind, kommt es zudem zu gegenseitigen Rückkopplungen der Schwingungen der Welle und der Räder. Diese Erscheinungen führen nicht nur zur Abstrahlung von Luftschall oder Körperschall durch die Welle, sondern auch zu einer zusätzlichen Belastung und damit zu einer Verminderung der Lebensdauer der Welle.

Die Verwendung von viskoselastischen Dämpfungsschichten ist für Zahnräder bereits aus der DE-OS 31 41 101 bekannt.

Der Erfindung liegt die Aufgabe zugrunde, einen Wellenaufbau unter Verwendung einer viskoselastischen Masse anzugeben, bei dem die auftretenden Biege- und Torsionsschwingungen gedämpft sind und damit die Lebensdauer der Welle erhöht ist, sodaß eine wirtschaftliche Herstellung oder Verwendung der Welle ermöglicht ist.

Nach der vorliegenden Erfindung ist die Welle als Hohlwelle ausgebildet, deren innere Wandung mit einer koaxialen Schicht aus viskoselastischer Masse beschichtet ist, gegen die ein ebenfalls koaxialer, zylinderischer Körper kraftschlüssig anliegt. Dies führt zur Dämpfung beider Schwingungsarten und damit zu einer Erhöhung der Lebensdauer der Welle.

Der innerhalb der koaxialen Schicht aus der viskoselastischen Masse befindliche, zylinderische Körper kann je nach der Dimensionierung der ganzen Welle unterschiedlich ausgeführt sein.

Bei Wellen mit größerem Gesamtdurchmesser kann es aus Preis-, Gewichts- oder Materialgründen zweckmäßig sein, den zylinderischen Körper nach der Erfindung als weitere Hohlwelle auszubilden. Aus Gründen der kraftschlüssigen Anlage an die Schicht kann dann in Weiterbildung der Erfindung der zylinderische Körper aus federelastischem Material bestehen und einen wendelförmigen Schlitz aufweisen. Die wendelförmige Ausbildung des Schlitzes vermeidet Unwuchten und erlaubt doch die Ausnutzung der Federwirkung zur kraftschlüssigen Anlage an der viskoselastischen Schicht. Bei größeren Durchmessern und höheren Drehzahlen kann zudem die auftretende Fliehkraft zur kraftschlüssigen Anlage beitragen.

Bei Wellen mit kleinerem Durchmesser genügt es, den zylinderischen Körper massiv auszubilden.

Zu besonders günstigem Dämpfungsverhalten gelangt man, wenn nach der Erfindung die Wandstärke der Hohlwelle, der Schicht aus der viskoselastischen Masse und der weiteren Hohlwelle beziehungsweise der Radius des massiven zylinderischen Körpers sich wie 4:1:1 verhalten.

Weiterer Gegenstand der Erfindung sind Verfahren zum Herstellen von Wellen der vorstehend beschriebenen Art mit der Aufgabe, eine leichte und preiswerte Herstellung zu erlauben.

So kann gemäß einem Aspekt der Erfindung die viskoselastische Masse durch Tauchen auf die Innenseite der Hohlwelle aufgebracht werden. Überschüssige Masse kann von der äußeren Oberfläche und den Stirnflächen der Hohlwelle leicht abgestreift werden und die Schichtstärke der in der Hohlwelle befindlichen Masse kann durch Ziehen über einen Dorn oder durch Fliehkraft kalibriert werden.

Zur Einführung eines zylinderischen Körpers mit einem wendelförmigen Schlitz in die beschichtete Hohlwelle wird der Körper unter einer, seinen Durchmesser vermindernden Torsionsspannung, eingeführt und nach Erreichen seiner Endlage entspannt.

Bei zylinderischen Körpern, die keinen Schlitz aufweisen oder massiv sind, ist es erfindungsgemäß vorteilhaft, sie unterkühlt in die beschichtete Hohlwelle einzubringen und nach dem Erreichen ihrer Endlage auf Umgebungstemperatur zu bringen.

In einer weiteren Ausführungsform des Herstellungsverfahrens nach der Erfindung, wird die Innenseite der Hohlwelle mit einer dickeren Schicht oder mit einer, die Hohlwelle ausfüllenden Menge der viskoseleastischen Masse ausgefüllt beziehungsweise beschichtet, und der zylinderische Körper wird in die Masse eingepreßt.

Die Figuren zeigen in zum Teil schematischer Darstellung Ausführungsbeispiele von Wellen nach der Lehre der Erfindung. Dabei zeigt:

Fig.1 auf ihrer rechten Seite den Teil einer Welle, bei der der zylinderische Körper als Hohlwelle ausgebildet ist und auf der linken Seite einen Teil mit massivem, zylinderischen Körper,

Fig.2 einen Schnitt entlang der Ebene A-A durch den linken Teil der Fig.1,

Fig.3 einen Schnitt entlang der Ebene B-B durch den rechten Teil der Fig.1 und

Fig.4 einen zylinderischen Körper als Hohlwelle mit wendelförmigem Schlitz

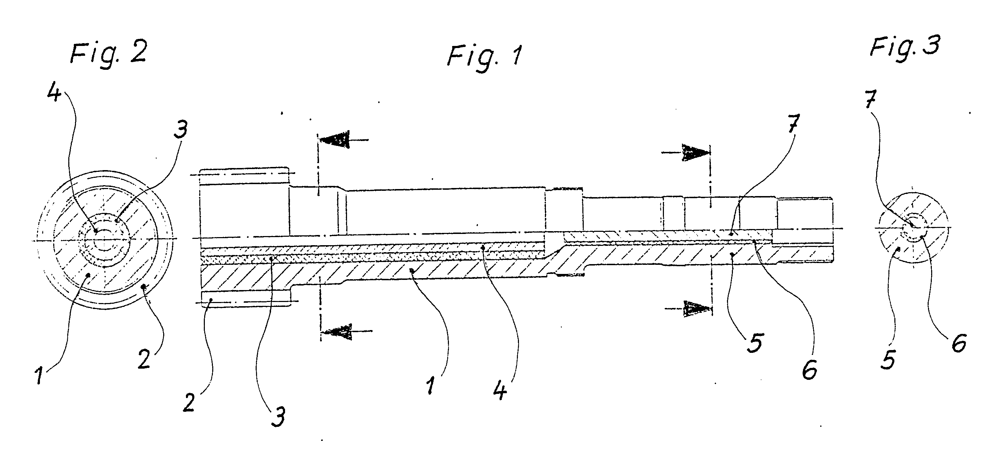

In den Figuren 1, 2 und 3 sind identische Zeichnungselemente mit gleichen Bezugzeichen versehen. In Fig.1, deren unterer Teil geschnitten dargestellt ist, ist der linke Teil der Hohlwelle mit (1) bezeichnet. Auf das freie Ende der Hohlwelle (1) ist ein Zahnrad (2) aufgesetzt. Mit (3) ist die koaxiale Schicht aus der viskoselastischen Masse bezeichnet und (4) ist der zylindrische Körper, der hier die Form einer Hohlwelle hat.

In der rechten Hälfte der Fig.1 ist die Hohlwelle (5) mit geringerem Durchmesser ausgebildet. Dementsprechend ist auch die Schicht (6) aus viskoselastischem Material dünner bemessen und der zylinderische Körper (7) ist massiv ausgeführt.

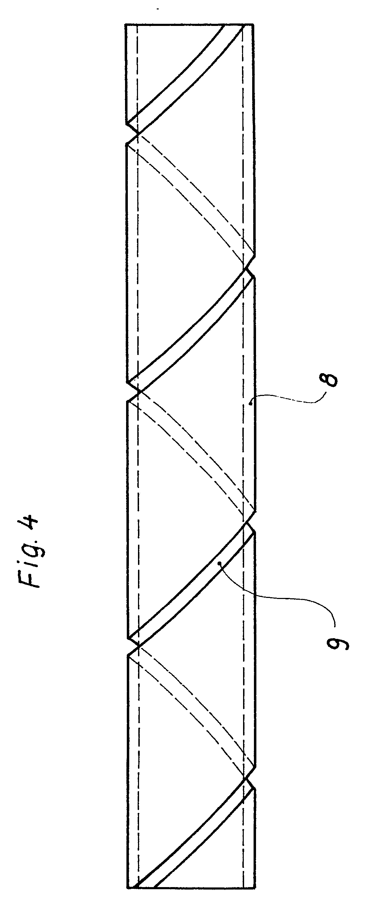

Der in Fig.4 dargestellte zylinderische Körper (8) weist einen wendelförmigen Schlitz auf. Dies erlaubt, den Körper an seinen beiden freien Enden zu erfassen und zu tordieren.

**Ansprüche**

1.) Schwingungsgedämpfte Welle mit einer Dämpfungsschicht aus einer viskoselastischen Masse,
**dadurch gekennzeichnet,**
daß die Welle als Hohlwelle (1, 5) ausgebildet ist, deren innere Wandung mit einer koaxialen Schicht (3, 6) aus der viskoselastischen Masse beschichtet ist, gegen die ein ebenfalls koaxialer, zylinderischer Körper (4, 7, 8) kraftschlüssig anliegt.

2.) Welle nach Anspruch 1,
**dadurch gekennzeichnet,**
daß der zylinderische Körper als weitere Hohlwelle (4) ausgebildet ist.

3.) Welle nach Anspruch 2,
**dadurch gekennzeichnet,**
daß der zylinderische Körper (8) aus federelastischem Material besteht.

4.) Welle nach Anspruch 1,
**dadurch gekennzeichnet,**
daß der zylinderische Körper (7) massiv ausgebildet ist.

5.) Welle nach Anspruch 1 oder einem der folgenden,
**dadurch gekennzeichnet,**
daß die Wandstärke der Hohlwelle (1, 5), der Schicht (3, 4) der viskoselastischen Masse und der weiteren Hohlwelle (4, 8) beziehungsweise der Radius des massiven zylinderischen Körpers (7) sich wie 4:1:1 verhalten.

6.) Verfahren zum Herstellen einer schwingungsgedämpften Hohlwelle nach Anspruch 1 oder einem der folgenden,
**dadurch gekennzeichnet,**
daß die viskoselastische Masse durch Tauchen auf die Innenseite der Hohlwelle aufgebracht wird.,

7.) Verfahren nach Anspruch 6,
**dadurch gekennzeichnet,**
daß die Schicht aus der viskoselastischen Masse durch Ziehen über einen Dorn oder durch Fliehkraft kalibriert wird.

8.) Verfahren zum Herstellen einer schwingungsgedämpften Welle nach Anspruch 3,
**dadurch gekennzeichnet,**
daß der zylinderische Körper (8) unter einer, seinen Durchmesser vermindernden Torsionsspannung in die beschichtete Welle (1) eingeführt und nach Erreichen seiner Endlage entspannt wird.

9.) Verfahren zum Herstellen einer schwingungsgedämpften Welle nach Anspruch 2 oder 4,
**dadurch gekennzeichnet,**
daß der zylinderische Körper (4, 7) unterkühlt in die beschichtete Hohlwelle eingebracht und nach Erreichen seiner Endlage auf Umgebungstemperatur gebracht wird.

10.) Verfahren zum Herstellen einer schwingungsgedämpften Welle nach Anspruch 2 oder 4,
**dadurch gekennzeichnet,**
daß die Innenseite der Hohlwelle (1, 5) mit einer dickeren Schicht oder einer die Hohlwelle ausfüllenden Menge der viskoselastischen Masse beschichtet, beziehungsweise ausgefüllt wird und der zylinderische Körper (4, 7) in die Masse eingepreßt wird.

Fig. 2

Fig. 1

Fig. 3

EP 0 324 894 A2

Fig. 4